**Europäisches Patentamt**

**European Patent Office**

**Office européen des brevets**

(19)

(11) Veröffentlichungsnummer: **0 209 062**
**A2**

(12) # EUROPÄISCHE PATENTANMELDUNG

(21) Anmeldenummer: **86109316.9**

(22) Anmeldetag: **08.07.86**

(51) Int. Cl.⁴: **A 01 C 15/00**

(30) Priorität: **13.07.85 DE 3525090**

(43) Veröffentlichungstag der Anmeldung: **21.01.87**
**Patentblatt 87/4**

(84) Benannte Vertragsstaaten: **AT CH DE FR GB IT LI NL**

(71) Anmelder: **A.J. Tröster GmbH + Co KG,**
**Kaiserstrasse 9-11, D-6308 Butzbach (DE)**

(72) Erfinder: **Link, Alfred, Alte Brauerei 1, D-6308 Butzbach**
**(DE)**

(74) Vertreter: **Schlagwein, Udo, Dipl.-Ing., Anwaltsbüro**
**Ruppert & Schlagwein Bahnhofsallee 11, D-6350 Bad**
**Nauheim (DE)**

(54) **Düngerstreuer.**

(57) Bei einem Düngerstreuer haben die Austragskammern (8, 8') in der Mantelfläche der Förderräder (3, 3') über die Breite der Förderräder (3, 3') zunehmenden Querschnitt. Weiterhin verlaufen die Austragskammern (8, 8') schräg zur Drehachse der Förderräder (3, 3').

Die erstgenannte Maßnahme ermöglicht eine Proportionalität zwischen Ausbringmenge und Stellung der Schieber (5, 5'), mit denen die Ausbringmenge eingestellt wird. Die zweitgenannte Maßnahme führt zu einem besonders gleichmäßigen Austrag.

Anwaltsbüro
**Ruppert & Schlagwein**
B a h n s t r a s s e  1 1
D - 6 3 5 0  B a d  N a u h e i m
Telefon 06032 / 3 20 78

A.J. Tröster GmbH & Co KG                 Kaiserstr. 9 - 11

                                          6308 Butzbach


## Düngerstreuer

Die Erfindung bezieht sich auf einen Düngerstreuer mit einem Förderrad, welches in einem Düngerbehälter oberhalb einer mittels eines Schiebers unterschiedlich weit zu öffnenden Auslaßöffnung angeordnet ist und in seiner Mantelfläche Austragskammern hat. Solche Düngerstreuer werden zur Zeit gebaut und sind dem Fachmann bekannt.

Düngerstreuer dieser Art haben üblicherweise mehrere solcher Förderräder auf einer Streuwelle nebeneinander, so daß aus mehreren nebeneinander angeordneten Auslaßöffnungen Dünger ausgetragen werden kann. Um die Austragsmenge möglichst genau einstellen zu können, wird meist angestrebt, daß die Austragsmenge proportional mit der Öffnungsweite der Schieber zunimmt. Bei den bisherigen Düngerstreuern steigt mit dem Öffnen der Schieber die Austragsmenge zunächst überproportional an, während bei nahezu vollständig geöffneten Schiebern ein weiteres Öffnen kaum noch zu einer Erhöhung der Austragsmenge führt. Diese Gegebenheiten rühren daher, daß infolge des Schüttwinkels des Düngers und durch Rüttelbewegungen des fahrenden Düngerstreuers zwangsläufig auch ein Teil des Düngers aus dem vom Schieber abgedeckten Teil der Austragskammer ausgetragen wird. Vor allem bei langsamer Fahrt ist durch diesen Effekt die Ausbringmenge zu hoch.

...

Der Erfindung liegt die Aufgabe zugrunde, einen Düngerstreuer der eingangs genannten Art derart zu verbessern, daß die Austragsmenge der Stellung der Schieber optimal angepaßt ist.

Diese Aufgabe wird erfindungsgemäß dadurch gelöst, daß die Austragskammern über die Breite des Förderrades einen unterschiedlichen Querschnitt haben.

Durch diese Gestaltung kann man die Abhängigkeit zwischen Schieberstellung und Austragsmenge beliebig gestalten. Man kann zum Beispiel den beim Öffnen eines Schiebers zuerst freiwerdenden Bereich der Austragskammern mit einem geringen Querschnitt versehen, so daß die Austragsmenge bei kleinen Austragsleistungen feinfühlig veränderbar ist und der Einfluß durch infolge von Erschütterungen und des natürlichen Schüttwinkels aus dem abgedeckten Bereich nachrieselnden Dünger klein bleibt. Eine weitgehende Proportionalität zwischen Schieberstellung und Austragsmenge kann man erreichen, wenn der Querschnitt der Austragskammern in Öffnungsrichtung des Schiebers zunimmt.

Eine andere, vorteilhafte Ausgestaltung der Erfindung besteht darin, daß die Austragskammern in der Mantelfläche des Förderrades schräg zur Drehachse des Förderrades verlaufen. Durch diese Maßnahme erreicht man, daß die Autragskammern nicht plötzlich über ihre gesamte Länge über die Austragsöffnung gelangen, sondern allmählich. Dadurch rieselt der Dünger gleichmäßiger aus dem Düngerstreuer als bei den bisher bekannten Düngerstreuern. Weiterhin kann man durch eine solche Ausgestaltung die bisher immer auftretende Geschwindigkeitsabhängigkeit der Ausbringmenge beseitigen.

...

- 3 -

Als optimal hat sich ein Steigungswinkel der Austragskammern in Bezug auf die Drehachse des Förderrades von 30 Grad herausgestellt.

Eine andere, ganz besonders vorteilhafte Ausgestaltung der Erfindung besteht darin, daß die Austragskammern von einer Stirnseite des Förderrades zur anderen verlaufen und die stirnseitigen Austritte der Austragskammern aus dem Förderrad an derjenigen Förderradseite offen sind, zu der aufgrund der Steigung der Austragskammern und des Drehsinnes des Förderrades eine geringe Förderbewegung erfolgt und daß an der anderen Stirnseite eine die Austritte der Austragskammern abdeckende Scheibe vorgesehen ist.

Durch diese Maßnahme kommt es in den Austragskammern des Förderrades zu einer ständigen, geringen Förderbewegung zur offenen Stirnseite des Förderrades hin. Das verhindert daß sich Dünger zwischen den Austragskammern und dem Behälter sowie den Schieber verklemmt. Dank der erfindungsgemäßen Maßnahmen läßt sich die Streuwelle mit den Förderrädern mit geringerem Kraftaufwand drehen, der Schieber leicht verschieben und der Dünger wird nicht unnötig zermahlen.

Die Erfindung läßt zahlreiche Ausführungsformen zu. Zu ihrer weiteren Verdeutlicheung ist eine davon in der Zeichnung dargestellt und wird nachfolgend beschrieben. Die Zeichnung zeigt in

    Fig. 1   einen schematischen Querschnitt durch einen
             die Erfindung betreffenden Bereich eines
             Düngerstreuers,

. . .

Fig. 2   einen Längsschnitt durch die Anordnung nach
         Figur 1,

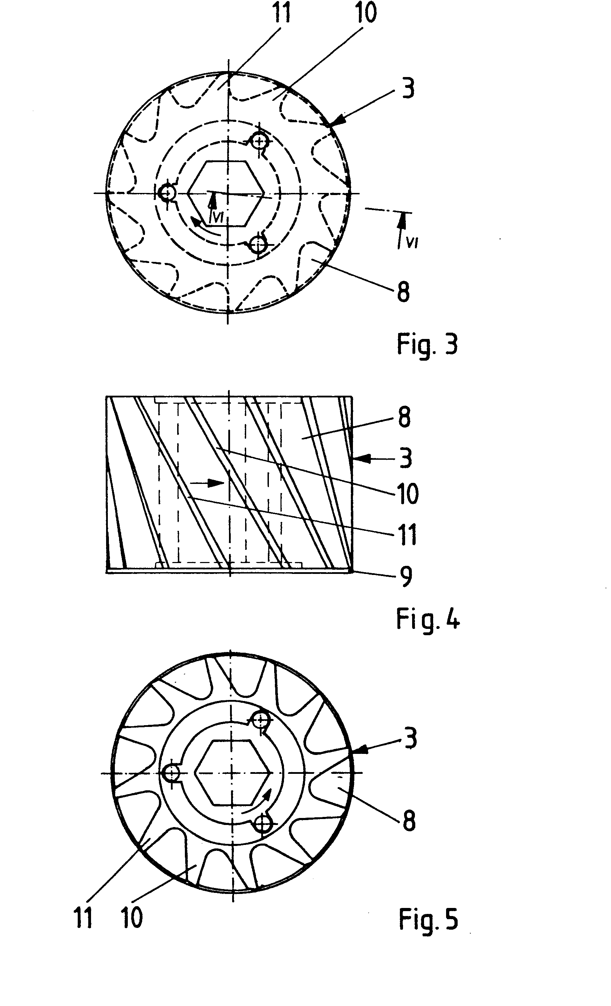

Fig. 3   ein Seitenansicht eines Streurades des
         Düngerstreuers,

Fig. 4   eine Vorderansicht des Streurades nach
         Figur 3,

Fig. 5   eine Ansicht der in Figur 4 gesehen linken
         Seite des Streurades,

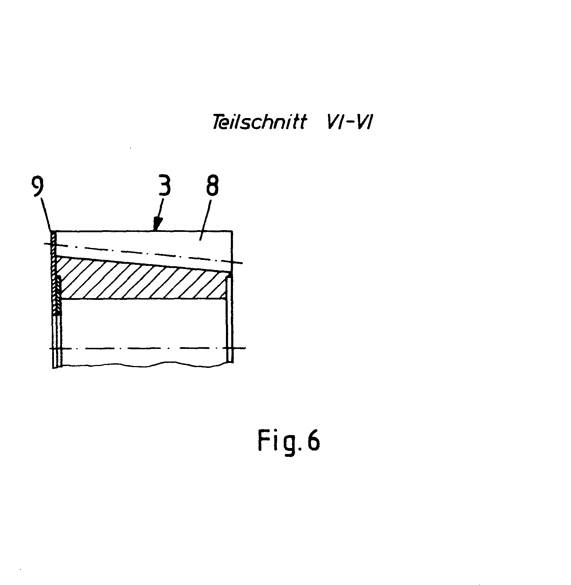

Fig. 6   einen Schnitt durch das Streurad entlang der
         Linie VI - VI in Figur 3.

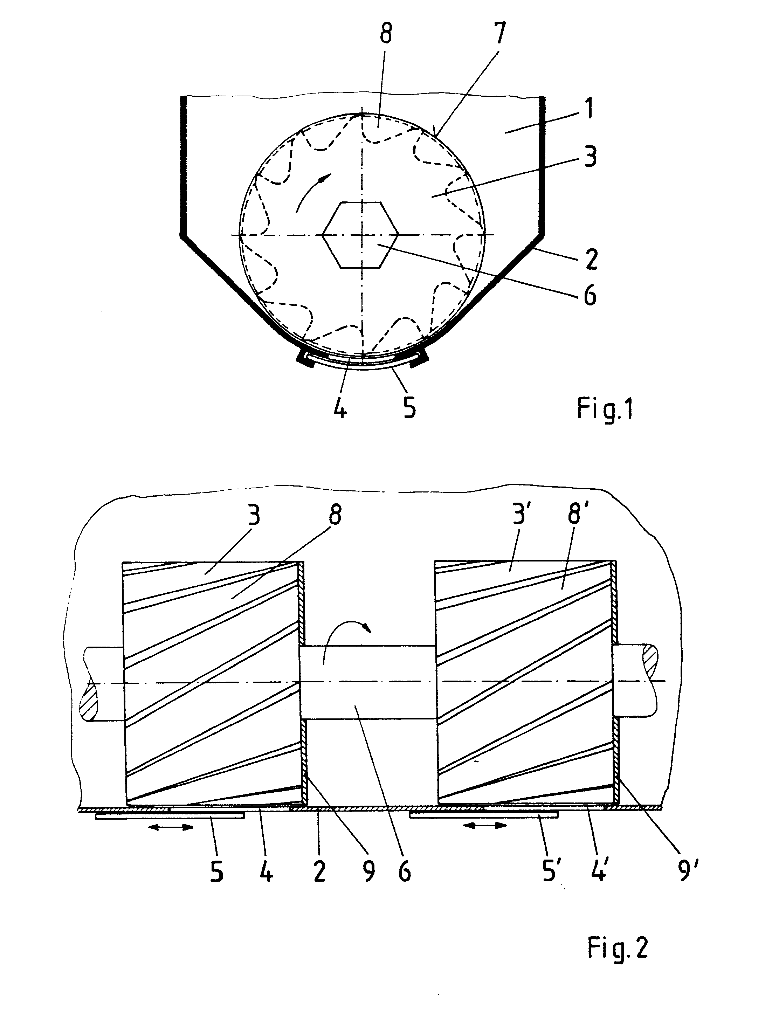

Die Figur 1 zeigt den unteren Bereich eines Düngerbehälters 1 mit einem Gehäuse 2, welches mit einem Winkel von etwa 90 Grad ein Förderrad 3 umschlingt und im Umschlingungsbereich gegen das Förderrad 3 anliegt. Im Umschlingungsbereich ist im Gehäuse 2 eine Auslaßöffnung 4 vorgesehen, die von einem Schieber 5 abgedeckt ist.

Das Förderrad 3 ist drehfest auf einer Streuwelle 6 angeordnet und hat in seiner Mantelfläche 7 gleichmäßig über seinen Umfang verteilt Austragskammern 8, deren besondere Gestaltung für die Erfindung wichtig ist. Mittels eines Pfeiles ist in Figur 1 verdeutlicht, daß sich das Förderrad bei Betrieb des Düngerstreuers im Uhrzeigersinn drehen soll.

Die Figur 2 zeigt, daß auf der Streuwelle 6 mehrere Förderräder 3, 3' nebeneinander angeordnet sind. Entsprechend hat natürlich auch das Gehäuse 2 mehrere Auslaßöffnungen 4,4' die von Schiebern 5, 5' mehr oder weniger abdeckbar sind. In der in Figur 2 dargestellten Position sind die Schieber 5, 5' zu etwa einem Drittel geöffnet.

...

- 5 -

Zu erkennen ist desweiteren, daß die Austragskammern 8, 8´ schräg zur Drehachse der Streuwelle 6 verlaufen. An den in Figur 2 gesehen rechten Stirnseiten der Förderräder 3, 3´ ist jeweils eine Scheibe 9 in Form eines Abdeckbleches angeordnet, welche die stirnseitigen Austritte der Austragskammern 8, 8´ abdeckt. Die jeweils andere Stirnseite der Förderräder 3, 3´ ist nicht abgedeckt. Dreht sich die Streuwelle 6 im Uhrzeigersinn, so kommt es in den Austragskammern 8, 8´ auf Grund der Steigung der Austragskammern von etwa 30 Grad zu einer geringen Förderbewegung in der Zeichnung gesehen nach links, wodurch stets eine kleine Düngermenge zur Seite hin austreten kann.

Die genauere Gestaltung des Förderrades 3 ergibt sich aus den Figuren 3 bis 6. Man erkennt, daß die Austragskammern 8 durch Zahnlücken einer sägezahnartigen Verzahnung 10, 11 gebildet sind. Die Figur 4 läßt erkennen, daß die Verzahnung 10, 11 mit einem Winkel von etwa 30 Grad zur Drehachse des Förderrades 3 verläuft. Ein Vergleich der beiden Seitenansichten in Figur 3 und Figur 5 und insbesondere die Schnittdarstellung in Figur VI zeigen, daß der Querschnitt der Austragskammern 8 in Figur 4 gesehen zur linken Seite hin und in Figur 6 gesehen zur rechten Seite hin zunimmt.

In Figur 2 befinden sich die Seiten der Austragskammern 8, 8´ mit kleinerem Querschnitt an der rechten Seite. Öffnet man die Schieber 5, 5´, indem man sie nach links schiebt, so wird zunächst ein Austragskammerbereich mit kleinem Querschnitt freigegeben.

...

Auflistung der verwendeten Bezugszeichen

    1  Düngerbehälter
    2  Gehäuse
    3  Förderrad
    4  Auslaßöffnung
    5. Schieber

    6  Streuwelle
    7  Mantelfläche
    8  Austragskammer
    9  Scheibe
   10  Verzahnung

   11  Verzahnung

- 7 -

Ansprüche

1. Düngerstreuer mit einem Förderrad, welches in einem Düngerbehälter oberhalb einer mittels eines Schiebers unterschiedlich weit zu öffnenden Auslaßöffnung angeordnet ist und in seiner Mantelfläche Austragskammern hat, dadurch gekennzeichnet, daß die Austragskammern (8, 8´) über die Breite des Förderrades (3, 3´) einen unterschiedlichen Querschnitt haben.

2. Düngerstreuer nach Anspruch 1, dadurch gekennzeichnet, daß der Querschnitt der Austragskammern (8, 8´) in Öffnungsrichtung des Schiebers (5, 5´) zunimmt.

3. Düngerstreuer nach den Ansprüchen 1 oder 2, dadurch gekennzeichnet, daß die Austragskammern (8, 8´) in der Mantelfläche (7) des Förderrades (3, 3´) schräg zur Drehachse des Förderrades (3, 3´) verlaufen.

4. Düngerstreuer nach Anspruch 3, dadurch gekennzeichnet, daß die Austragskammern (8, 8´) mit einem Steigungswinkel von 30 Grad zur Drehachse des Förderrades (3, 3´) verlaufen.

5. Düngerstreuer nach einem oder mehreren der vorangehenden Ansprüche, dadurch gekennzeichnet, daß die Austragskammern (8, 8´) von einer Stirnseite des Förderrades (3, 3´) zur anderen verlaufen und die stirnseitigen Austritte der Austragskammern (8, 8´) aus dem Förderrad (3, 3´) an derjenigen Förderradseite offen sind, zu der aufgrund der Steigung der Austragskammern (8, 8´) und des Drehsinnes des Förderrades (3, 3´) eine geringe Förderbewegung erfolgt und daß an der anderen Stirnseite eine die Austritte der Austragskammern (8, 8´) abdeckende Scheibe (9) vorgesehen ist.

...

1/3

Fig.1

Fig.2

Fig. 3

Fig. 4

Fig. 5

0209062

Teilschnitt VI-VI

Fig. 6